# EUROPÄISCHE PATENTSCHRIFT

(11) **EP 1 406 143 B1**
(45) Veröffentlichungstag und Bekanntmachung des Hinweises auf die Patenterteilung: **02.05.2007**
(21) Anmeldenummer: 03016981.7
(22) Anmeldetag: 25.07.2003
(51) Int. Cl.: G05F 1/56, H02J 7/00

(54) **Verfahren und Vorrichtung zum Symmetrieren der Kondensatoren einer Kondensatorbatterie**
Method and apparatus for symmetrizing the condensators of a battery of condensators
Procédé et dispositif de symétrisation des condensateurs d'une batterie de condensateurs

(30) Priorität: 07.08.2002 DE 10236165
(43) Veröffentlichungstag der Anmeldung: 07.04.2004
(73) Patentinhaber: SIEMENS AKTIENGESELLSCHAFT, 80333 München (DE)
(72) Erfinder: Hein, Gerd, 91074 Herzogenaurach (DE)

(56) Entgegenhaltungen:
- US-A- 5 581 170
- US-A- 5 631 537
- US-A- 5 675 233
- US-A- 5 952 815
- US-B1- 6 285 161

## Beschreibung

Die Erfindung betrifft ein Verfahren zum Symmetrieren der Kondensatoren einer Kondensatorbatterie, wobei zur Überwachung des Ladezustands der Kondensatoren drei Spannungspegel durch eine Referenzspannungsquelle bereitgestellt werden und an jedem Kondensator die Kondensatorspannung ermittelt und mit einem Spannungspegel verglichen wird. Die Erfindung betrifft auch eine Vorrichtung zur Durchführung des Verfahrens.

Als Energiespeicher, z.B. in einer Lokomotive oder in einem anderen Schienentriebfahrzeug, insbesondere aber bei einer stationären Anwendung in einer Fahrleitung, ist häufig eine Kondensatorbatterie eingesetzt. Diese besteht aus mehreren parallel geschalteten Reihen aus jeweils einzelnen Kondensatoren, die so genannte Ultra-Kondensatoren sein können. In einem solchen Energiespeicher wird zum Beispiel die Bremsenergie zwischengespeichert, um sie beim Abfahren des Fahrzeuges wieder abzugeben. Damit eine möglichst große Energie in einer solchen Kondensatorbatterie gespeichert werden kann, ist es wichtig, alle Kondensatoren einer Batterie gleichmäßig zu belasten, d.h. gleichmäßig und vollständig zu laden. Dieser Vorgang wird "Symmetrieren" genannt. Sollte an einzelnen Kondensatoren, wenn auch nur kurzzeitig, eine über den Nennwert hinausgehende Kondensatorspannung anliegen, so führt das zu einer schnelleren Alterung dieses Kondensators. Er muss dann im Extremfall vorzeitig entfernt werden, was aufwändig ist. Unterschiedliche Spannungen an den einzelnen Kondensatoren, die den Energiespeicher uneffizient machen, sind im Wesentlichen auf Kondensatoreigenschaften zurückzuführen, z.B. auf den Ersatz-Serienwiderstand und/oder auf die Kapazität des Kondensators. Auch Parallelwiderstände können sich auswirken.

Es ist daher erforderlich, jeden einzelnen Kondensator einer Kondensatorbatterie an einer oberen Spannungsgrenze zu laden und vor einer Überladung zu schützen, die zu einer Zerstörung des Kondensators führen könnte. Bei zu hoher anliegender Spannung könnte es zum Abblasen des Elektrolyten kommen, der brennbar und toxisch ist. Es soll aber auch mit einer Diagnose frühzeitig zu erkennen sein, ob ein Kondensator nicht voll funktionsfähig ist.

Aus der US 5 952 815 ist ein Verfahren zum Symmetrieren der Ladung von Speichern bekannt, bei dem jedoch nur das Überschreiten eines Schwellwertes beachtet wird, wenn ein Ladevorgang ausgelöst werden soll. Ein unterer und ein oberer Schwellwert sind für den Ladevorgang nicht bedeutend.

Aus der US 5 581 170 ist eine Vorrichtung zum Schutz einer Batterie bekannt, bei der eine Störung erkannt wird, wenn ein Schwellwert überschritten ist.

Die Ladevorrichtung für Batterien der US 5 675 233 dient dazu, eine Ladespannung bereitzustellen und ist nicht direkt für das Symmetrieren gedacht.

Auch die US 6 285 161 nennt eine Ladevorrichtung für eine Batterie, die nicht zum Symmetrieren geeignet ist.

Die Vorrichtung der US 5 631 537 ist eine Schutzvorrichtung, die eine Batterie vor Überladung schützen soll.

Es ist bereits vorgeschlagen worden, eine Spannungssymmetrierung aller Kondensatoren (Angleichung der an den Kondensatoren anliegenden Spannungen bzw. der Ladungen der Kondensatoren) durchzuführen, damit diese gleichmäßig geladen werden.

Ein bekanntes Verfahren sieht vor, dass jeder Kondensator einzeln geladen wird. Es sind dazu Kleinschütze nötig, die die Kondensatoren nacheinander an die Stromversorgung anschließen. Dieses Verfahren dauert sehr lange. Außerdem ist eine aufwändige Verdrahtung notwendig.

Es ist auch schon vorgeschlagen worden, die einzelnen Kondensatoren ab dem Erreichen eines Sollwertes sofort alle zu symmetrieren, mit dem Ziel, eine gleichmäßige Ladung zu bekommen. Dazu ist parallel zu jedem Kondensator ein Entladezweig notwendig. Dieses Verfahren dauert außerdem sehr lange, wenn nur ein kleiner Symmetrierstrom möglich ist.

Der Erfindung liegt die Aufgabe zugrunde, ein Verfahren zum gleichmäßigen Laden (Symmetrieren) der Kondensatoren einer Kondensatorbatterie anzugeben, das schnell und zuverlässig arbeitet und höhere Symmetrierströme ermöglicht, ohne jedoch eine große Anzahl zusätzlicher Bauelemente, die bei großen Kondensatorbatterien mit beispielsweise tausend Kondensatoren viel Platz beanspruchen und ein hohes Ausfallpotential haben, zu benötigen.

Es soll auch eine Vorrichtung zur Durchführung des Verfahrens angegeben werden.

Die Aufgabe, ein Verfahren anzugeben, wird gemäß der Erfindung dadurch gelöst, dass eine korrekte Ladung eines Kondensators angezeigt wird, wenn die Kondensatorspannung zwischen den beiden unteren Spannungspegeln liegt, dass eine Störung des Kondensators angezeigt wird, wenn die Kondensatorspannung größer ist als der höchste Spannungspegel, dass nur dann symmetriert wird, wenn weder eine korrekte Ladung noch eine Störung angezeigt werden, dass nach dem Laden der Kondensatoren für einen Kondensator der Normalbetrieb gegeben ist, wenn die Kondensatorspannung den niedrigsten Spannungspegel erreicht und den mittleren Spannungspegel noch nicht erreicht hat, dass der Symmetrierbetrieb beginnt, wenn die Kondensatorspannung den mittleren Spannungspegel erreicht hat und endet, wenn die Kondensatorspannung wieder den niedrigsten Spannungspegel erreicht hat und dass bei Wiedererreichen des niedrigsten Spannungspegels wieder der Normalbetrieb gegeben ist.

Für dieses Verfahren kommt man mit einer einfachen elektronischen Schaltung aus, bei der die Anzahl der benötigten Bauelemente minimal ist. Das Ausfallpotential ist dadurch ebenfalls gering. Die Qualität der Symmetrierung ist durch die Referenzspannungsquelle gewährleistet, da eine konstante und von Temperatureinflüssen weitgehend freie Quelle gewählt wird. Aus dieser Referenzspannungsquelle werden drei Spannungspegel erzeugt, die einer Auswerteelektronik zur Verfügung stehen. Der niedrigste Pegel und der mittlere Pegel legen ein Fenster fest, in dem alle Kondensatoren nach einem störungsfreien Ladevorgang liegen müssen. Der höchste Pegel legt eine Schutzschwelle fest. Das Überschreiten dieses höchsten Pegels ist ein Hinweis auf einen Fehler. Der Fehler kann optisch angezeigt werden. Es kann auch über ein Bussystem eine Auswerteeinheit über den Fehler informiert werden, so dass eine sofortige Diagnose des ausgefallenen Kondensators ermöglicht ist. Geeignete Spannungswerte für die einzelnen Spannungspegel sind 2,2 V für den niedrigsten Spannungspegel, 2,45 V für den mittleren Spannungspegel und 2,7 V für den höchsten Spannungspegel.

Mit dem Verfahren nach der Erfindung wird der Vorteil erzielt, dass die Symmetrierung und darüber hinaus die Überwachung der Kondensatorbatterie mit einfachen Mitteln schnell und zuverlässig möglich ist.

Es wird eine optimale Symmetrierung und eine Störungsanzeige gewährleistet. Eine Störung kann durch einen defekten Kondensator ausgelöst sein.

Beispielsweise wird eine Störung des Kondensators angezeigt, wenn durch die Steigung der Spannung am Kondensator während des Ladens des Kondensators ein Grenzwert überschritten wird. Damit wird vorteilhaft eine zusätzliche Möglichkeit zum Erkennen eines defekten Kondensators bereitgestellt.

Die Spannungspegel werden beispielsweise über Optokoppler einer Auswerteeinrichtung zugeleitet. Dieses Übertragungsverfahren ist besonders zuverlässig.

Beispielsweise nutzt die Einrichtung der Referenzspannungsquelle eine an der Kondensatorbatterie anliegende Spannung. Es ist also vorteilhaft keine zusätzliche Spannungsversorgung erforderlich.

Beispielsweise wird als Spannungsquelle für das Symmetrieren die Summenspannung über zwei Kondensatoren der Kondensatorbatterie abgegriffen. Die beiden Kondensatoren sind dabei zwei benachbarte Kondensatoren, was besonders einfach durchführbar ist.

Vor dem ersten Kondensator in der Kondensatorbatterie wird dabei anstelle des fehlenden Kondensators ein Wandler eingesetzt, so dass die Spannung, die sonst an zwei Kondensatoren anliegt, geliefert wird.

Mit der genannten Spannungsquelle für das Symmetrieren wird der Vorteil erzielt, dass mit einfachen Mitteln eine erhöhte Symmetrierspannung zur Verfügung gestellt ist, die bei Bedarf ein schnelles Symmetrieren erst erlaubt.

Zum Starten des Symmetrierbetriebs werden beispielsweise die Kondensatorspannungen aller Kondensatoren über den mittleren Spannungspegel angehoben.

Die Aufgabe, eine Vorrichtung zur Durchführung des Verfahrens anzugeben, wird gemäß der Erfindung dadurch gelöst, dass parallel zu jeweils zwei oder mehr Kondensatoren der Kondensatorbatterie eine Serienschaltung aus einem ohmschen Widerstand und einem ersten Transistor angeordnet ist, dass parallel zum ersten Transistor mindestens ein weiterer Transistor geschaltet ist, dass die Transistoren mit einer Auswerteeinheit verbunden sind und dass Spannungsabgriffe der Kondensatoren mit der Auswerteeinrichtung verbunden sind.

Die Kondensatorbatterie umfasst z.B. 4 bis 8, insbesondere 6 Kondensatoren.

Die gewünschten Spannungspegel können also aus der Spannung der zu symmetrierenden bzw. zu überwachenden Kondensatoren erzeugt werden.

Für parallel geschaltete Kondensatoren wird nur ein Spannungsabgriff benötigt, da sich Kondensatoren in einer Parallelschaltung untereinander selbst symmetrieren. Die Anzahl der notwendigen Bauelemente wird dadurch weiter gesenkt.

Zum Übermitteln der Spannungspegel an ein Bussystem stehen wegen der dazu notwendigen Potentialtrennung beispielsweise mit den Kondensatoren Optokoppler in Verbindung, die mit der Auswerteeinrichtung verbunden sind.

Statt drei Optokopplern kann auch ein Zweifachkoppler eingesetzt sein.

Der für das Symmetrieren notwendige ohmsche Widerstand der Serienschaltung dient als Entladewiderstand und kann beispielsweise ein großer Drahtwiderstand sein. Er kann auch ein Flachbodenwiderstand, ein HSA-Widerstand oder auch ein Zementwiderstand sein. Die Transistoren sind in der Regel sogenannte Feldeffekttransistoren. Gegebenenfalls können diese Feldeffekttransistoren mit Kühlkörpern ausgestattet sein. Die Spannung der Referenzspannungsquelle dient an den Feldeffekttransistoren als Gate-Treiber-Spannung. Je nach Anzahl der parallel geschalteten Transistoren und gegebenenfalls aufgrund des Aufbaus der Transistoren werden die gewünschten Spannungspegel erzeugt.

Zum Anzeigen einer Störung kann die Auswerteeinrichtung vorteilhaft mit einer Leuchtdiode verbunden sein.

Mit dem Verfahren nach der Erfindung sowie mit der Vorrichtung zur Durchführung des Verfahrens wird insbesondere der Vorteil erzielt, dass mit einfachen Mitteln geeignete Spannungspegel zur Verfügung gestellt werden, die dann vorteilhafterweise durch Vergleich mit der momentanen Spannung an einem Kondensator einer Kondensatorbatterie zuverlässige Angaben über die gleichmäßige Ladung der Kondensatorbatterie, sowie über einen möglichen Defekt eines Kondensators machen.

Es muss vorteilhaft nur dann symmetriert werden, wenn es nicht mehr möglich ist, die Kondensatorspannungen aller Kondensatoren zwischen den beiden unteren Spannungspegeln zu halten.

## Patentansprüche

1. Verfahren zum Symmetrieren der Kondensatoren einer Kondensatorbatterie, wobei zur Überwachung des Ladezustands der Kondensatoren drei Spannungspegel durch eine Referenzspannungsquelle bereitgestellt werden und an jedem Kondensator die Kondensatorspannung ermittelt und mit einem Spannungspegel verglichen wird, **dadurch gekennzeichnet,**
**dass** eine korrekte Ladung eines Kondensators angezeigt wird, wenn die Kondensatorspannung zwischen den beiden unteren Spannungspegeln liegt,
**dass** eine Störung des Kondensators angezeigt wird, wenn die Kondensatorspannung größer ist als der höchste Spannungspegel,
**dass** nur dann symmetriert wird, wenn weder eine korrekte Ladung noch eine Störung angezeigt werden,
**dass** nach dem Laden der Kondensatoren für einen Kondensator der Normalbetrieb gegeben ist, wenn die Kondensatorspannung den niedrigsten Spannungspegel erreicht und den mittleren Spannungspegel noch nicht erreicht hat,
**dass** der Symmetrierbetrieb beginnt, wenn die Kondensatorspannung den mittleren Spannungspegel erreicht hat und endet, wenn die Kondensatorspannung wieder den niedrigsten Spannungspegel erreicht hat und
**dass** bei Wieder-Erreichen des niedrigsten Spannungspegels wieder der Normalbetrieb gegeben ist.

2. Verfahren nach Anspruch 1, **dadurch gekennzeichnet, dass** eine Störung des Kondensators angezeigt wird, wenn durch die Steigung der Spannung am Kondensator während des Ladens des Kondensators ein Grenzwert überschritten wird.

3. Verfahren nach einem der Ansprüche 1 oder 2,
**dadurch gekennzeichnet, dass** die Spannungspegel über Optokoppler einer Auswerteeinrichtung zugeleitet werden.

4. Verfahren nach einem der Ansprüche 1 bis 3,
**dadurch gekennzeichnet, dass** die Referenzspannungsquelle eine an der Kondensatorbatterie anliegende Spannung nutzt.

5. Verfahren nach Anspruch 4,
**dadurch gekennzeichnet, dass** als Spannungsquelle für das Symmetrieren die Summenspannung über zwei Kondensatoren der Kondensatorbatterie abgegriffen wird.

6. Verfahren nach einem der Ansprüche 1 bis 5, **dadurch gekennzeichnet, dass** zum Starten des Symmetrierbetriebs die Kondensatorspannungen aller Kondensatoren über den mittleren Spannungspegel angehoben werden.

7. Vorrichtung zur Durchführung des Verfahrens nach einem der Ansprüche 1 bis 6, **dadurch gekennzeichnet, dass**
parallel zu jeweils zwei oder mehr Kondensatoren der Kondenatorbatterie eine Serienschaltung aus einem ohmschen Widerstand und einem ersten Transistor angeordnet ist,
dass parallel zum ersten Transistor mindestens ein weiterer Transistor geschaltet ist,
dass die Transistoren mit einer Auswerteeinrichtung verbunden sind und
dass Spannungsabgriffe der Kondensatoren mit der Auswerteeinrichtung verbunden sind.

8. Vorrichtung nach Anspruch 7, **dadurch gekennzeichnet, dass** zum Übermitteln der Spannungspegel an ein Bussystem Optokoppler vorhanden sind.

9. Vorrichtung nach Anspruch 8, **dadurch gekennzeichnet, dass** statt drei Optokopplern ein Zweifachkoppler eingesetzt ist.

## Claims

1. Method for balancing of capacitors in a capacitor bank, where three voltage levels are produced by a reference voltage source in order to monitor the state of charge of the capacitors and the capacitor voltage on each capacitor is determined and is compared with a voltage level, **characterized**
**in that** a correct charge on a capacitor is indicated when the capacitor voltage is between the two lower voltage levels,
**in that** a fault in the capacitor is indicated when the capacitor voltage is greater than the highest voltage level,
**in that** balancing is carried out only when neither a correct charge nor a fault is indicated,
**in that**, after charging the capacitors, normal operation is started for one capacitor when the capacitor voltage reaches the lowest voltage level and has not yet reached the central voltage level,
**in that** balancing operation starts when the capacitor voltage has reached the central voltage level, and ends when the capacitor voltage has once again reached the lowest voltage level, and
**in that**, when the lowest voltage level is reached once again, normal operation is once again started.

2. Method according to Claim 1,
**characterized in that** a fault in the capacitor is indicated when the gradient of the voltage on the capacitor during the charging of the capacitor exceeds a limit value.

3. Method according to one of Claims 1 or 2,
**characterized in that** the voltage levels are supplied via optocouplers to an evaluation device.

4. Method according to one of Claims 1 to 3,
**characterized in that** the reference voltage source uses a voltage which is present in the capacitor bank.

5. Method according to Claim 4,
**characterized in that** the sum voltage across two capacitors in the capacitor bank is tapped off as a voltage source for balancing.

6. Method according to one of Claims 1 to 5,
**characterized in that**, in order to start balancing operation, the capacitor voltages of all the capacitors are raised above the central voltage level.

7. Apparatus for carrying out the method according to one of Claims 1 to 6,
**characterized in that**
a series circuit formed from a non-reactive resistor and a first transistor is arranged in parallel with in each case two or more capacitors in the capacitor bank,
**in that** at least one further transistor is connected in parallel with the first transistor,
**in that** the transistors are connected to an evaluation device, and
**in that** voltage taps on the capacitors are connected to the evaluation device.

8. Apparatus according to Claim 7,
**characterized in that** optocouplers are provided in order to transmit the voltage levels to a bus system.

9. Apparatus according to Claim 8,
**characterized in that** a double coupler is used instead of three optocouplers.

## Revendications

1. Procédé de symétrisation des condensateurs d'une batterie de condensateurs, dans lequel, pour contrôler l'état de charge des condensateurs, on se procure trois niveaux de tension par une source de tension de référence et on détermine la tension de condensateur pour chaque condensateur et on la compare à un niveau de tension, **caractérisé**
**en ce qu'**une charge correcte d'un condensateur est indiquée si la tension de condensateur est comprise entre les deux niveaux de tension inférieurs,
**en ce qu'**un dysfonctionnement du condensateur est indiqué si la tension des condensateurs est plus haute que le niveau de tension le plus haut,
**en ce que** l'on ne symétrise que si ni une charge correcte, ni un dysfonctionnement est indiqué,
**en ce qu'**après la charge des condensateurs, le fonctionnement normal est donné pour un condensateur lorsque la tension de condensateur a atteint le niveau de tension le plus bas et n'a pas encore atteint le niveau de tension médian,
**en ce que** le fonctionnement de symétrisation commence lorsque la tension des condensateurs a atteint le niveau de tension médian et se termine lorsque la tension de condensateur a atteint à nouveau le niveau de tension le plus bas et
**en ce que**, lorsque le niveau de tension le plus bas a été atteint à nouveau, le fonctionnement normal est donné à nouveau.

2. Procédé suivant la revendication 1,
**caractérisé en ce qu'**un dysfonctionnement du condensateur est indiqué lorsque, par l'élévation de la tension sur le condensateur, une valeur limite est dépassée pendant la charge du condensateur.

3. Procédé suivant l'une des revendications 1 ou 2, **caractérisé en ce que** le niveau de tension est envoyé par un coupleur optique à un dispositif d'exploitation.

4. Procédé suivant l'une des revendications 1 à 3, **caractérisé en ce que** la source de tension de référence utilise une tension s'appliquant à la batterie de condensateurs.

5. Procédé suivant la revendication 4,
**caractérisé en ce qu'**il est prélevé, comme source de tension pour la symétrisation, la tension somme sur deux condensateurs de la batterie de condensateurs.

6. Procédé suivant l'une des revendications 1 à 5, **caractérisé en ce que**, pour faire débuter le fonctionnement en symétrisation, les tensions de condensateur de tous les condensateurs sont élevées au-dessus du niveau de tension médian.

7. Dispositif pour la mise en oeuvre du procédé suivant l'une des revendications 1 à 6, **caractérisé**
**en ce qu'**il est monté en parallèle à respectivement deux ou plusieurs condensateurs de la batterie de condensateurs un circuit série constitué d'une résistance ohmique et d'un premier transistor,
**en ce qu'**il est monté en parallèle au premier transistor au moins un autre transistor,
**en ce que** les transistors sont reliés à un dispositif d'exploitation et
**en ce que** des prises de tension des condensateurs sont reliées au dispositif d'exploitation.

8. Dispositif suivant la revendication 7, **caractérisé en ce qu'**il est prévu un coupleur optique pour la détermination des niveaux de tension sur un système de bus.

9. Dispositif suivant la revendication 8, **caractérisé en ce qu'**il est utilisé un coupleur double au lieu de trois coupleurs optiques.
